# EUROPÄISCHE PATENTSCHRIFT

(11) **EP 1 967 554 B1**
(45) Veröffentlichungstag und Bekanntmachung des Hinweises auf die Patenterteilung: **11.04.2012**
(21) Anmeldenummer: 07003805.4
(22) Anmeldetag: 23.02.2007
(51) Int. Cl.: C09D 4/00, C09D 7/00

(54) **Grundierungs- und Markierungszusammensetzungen**
Undercoat and marking compounds
Composition de première couche et de marquage

(43) Veröffentlichungstag der Anmeldung: 10.09.2008
(73) Patentinhaber: Triflex Beschichtungssysteme GmbH & Co. Kommanditgesellschaft, 32423 Minden (DE)
(72) Erfinder: Raschuba, Hermann, 31712 Niedernwöhren (DE)
(74) Vertreter: von Renesse, Dorothea

(56) Entgegenhaltungen:
- EP-A1- 0 303 207
- WO-A-00/20482
- WO-A-2006/026671
- WO-A1-03/029377
- US-A- 5 801 219
- US-A1- 2004 110 895
- US-A1- 2006 293 424

## Beschreibung

Die vorliegende Erfindung betrifft Markierungssysteme und Markierungszusammensetzungen, Verfahren zu deren Herstellung und deren Verwendung zu Markierungszwecken auf einem Untergrund.

Fahrbahnmarkierungen, Straßenmarkierungen oder Bodenmarkierungen sind auf der Fahrbahnoberfläche einer Straße angebrachte Zeichen. Temporäre Fahrbahnmarkierungen, welche beispielsweise bei Baustellen verwendet werden, können mit Hilfe von Haftklebern auf Straßenoberflächen, wie Beton oder Asphalt, aufgebracht werden.

So offenbart beispielsweise die EP 0 488 526 A1 ein Straßenmarkierungsmaterial mit einer Oberschicht und einer Klebstoffschicht sowie einer wahlweise vorhandenen Basislage zwischen der Oberschicht und der Klebstoffschicht. Der Klebstoff besteht aus einem Kautschuk mit einer Glasübergangstemperatur (Tg) zwischen -120 und -50 °C und einem Tackifier mit einem Ring-Kugel-Erweichungspunkt zwischen 70 und 140 °C.

EP 0 705 307 A1 offenbart ein Verfahren zum Aufkleben einer auf der Rückseite klebstoffbeschichteten vorgeformten Fahrbahnmarkierung auf eine Straßenoberfläche, umfassend:
(a) Auftragen einer Grundierungszusammensetzung auf die Straßenoberfläche, wobei die Grundierungszusammensetzung eine homogene flüssige Lösung, die polymeres Material sowie wenigstens ein wassermischbares Lösungsmittel, das mit Wasser ein Azeotrop zu bilden vermag, enthält, in einer ausreichenden Menge, um für eine Haftung zwischen nassen oder trockenen Straßenoberflächenmaterialien und mit Klebstoff beschichteten Gegenständen zu sorgen, wobei das polymere Material ein aromatisches und/oder aliphatisches Kohlenwasserstoffharz und/oder ein Kohlenwasserstoffharz mit Phenolfunktionen umfasst;
(b) das Verdunstenlassen des Lösungsmittels, so dass sich auf der Straßenoberfläche ein Rückstand bildet; und
(c) das Auftragen einer auf der Rückseite klebstoffbeschichteten vorgeformten Fahrbahnmarkierung über den Rückstand auf der Straßenoberfläche.

EP 1 025 173 A1 betrifft eine thermoplastische Markierungszusammensetzung, die enthält:
(a) 10 bis 80 Gew.-% eines Bindemittels, das seinerseits umfasst:
   (i) 1 bis 99 Gew.-% mindestens eines homogenen Interpolymers von Ethylen und mindestens einem C₃-C₂₀-α-Olefin, nicht-konjuigerten Dien oder Cycloalken;
   (ii) 5 bis 70 Gew.-% mindestens eines klebrig machenden Mittels;
   (iii) 0 bis 10 Gew.-% eines Polyethylens, das seitenständige Säurefunktions-Reste aufweist, oder eines Wachses ohne funktionelle Reste; und
   (iii) 0 bis 20 Gew.-% eines Weichmachers; und
(b) 20 bis 90 Gew.-% eines anorganischen Füllstoffs

EP 0 141 646 A1 und WO 93/22508 beschreiben zur Markierung verwendete Kompositionen auf Elastomerbasis.

Die aus dem Stand der Technik bekannten Markierungssysteme weisen diverse Nachteile auf. So sind die beschriebenen Markierungssysteme häufig nicht ausreichend mechanisch belastbar, was dazu führt, dass sie sich bei häufigem Überfahren der Markierung insbesondere von Lastkraftwagen von dem Asphaltuntergrund ablösen. Darüber hinaus sind die bekannten Markierungssysteme häufig nicht witterungsstabil und zersetzten sich unter dem Einfluss von Sonneneinstrahlung, Regen und aufgrund von Temperaturschwankungen. Ferner sind die bekannten Markierungssysteme häufig nicht ausreichend elastisch ausgebildet, was ebenfalls zu Problemen bei dem Aufbringen und dem Entfernen der Markierungen führen kann. Schließlich weisen die bekannten Markierungssysteme häufig noch die Nachteile auf, dass sie nur umständlich, beispielsweise bei erhöhten Temperaturen aufgebracht werden können, und ein späteres Entfernen von temporären Markierungen umständlich und z.T. auch nicht rückstandsfrei ist.

Demnach ist es die Aufgabe der vorliegenden Erfindung, ein Markierungssystem bereitzustellen, welches möglichst gut auf den Untergrund haftet und den dortigen Beanspruchungen genügt sowie sich gleichwohl möglichst einfach und rückstandsfrei wieder ablösen läßt.

Gelöst wird diese Aufgabe durch ein Markierungssystem, welches eine Grundierungszusammensetzung und die erfindungsgemäße Markierungszusammensetzung umfasst.

### Grundierungszusammensetzung

Die Grundierungszusammensetzung, welche bevorzugt in dem erfindungsgemäßen Markierungssystem verwendet wird, enthält ein Styrol-Acrylat-Copolymer als Bindemittelharz, wobei es bevorzugt ist, wenn das Styrol-Acrylat-Copolymer in Form mindestens einer Dispersion in der Grundierungszusammensetzung enthalten ist. Die Grundierungszusammensetzung ist vorzugsweise wässrig.

Der Gehalt an der Dispersion, welche das Styrol-Acrylat-Copolymer enthält, in der Grundierungszusammensetzung kann in weiten Bereichen variieren. Es hat sich jedoch als bevorzugt herausgestellt, wenn der Gehalt der Dispersion in der Grundierungszusammensetzung 25 bis 85 Gew.-%, besonders bevorzugt 30 bis 80 Gew.-%, insbesondere 35 bis 75 Gew.-%, speziell 40 bis 70 Gew.-%, ganz speziell 45 bis 65 Gew.-%, jeweils bezogen auf die Grundierungszusammensetzung, beträgt

Neben der Bindemittelharzkomponente kann die Grundierungszusammensetzung zusätzlich mindestens ein mineralisches Additiv umfassen. Diese erhöhen vorzugsweise den Festkörper der Grundierung, und führen damit zu einer höheren Trockenschichtdicke. Des weiteren können die Durchtrocknung (Verfilmungszeit) sowie die Hafteigenschaften des Grundierfilmes positiv beeinflusst werden. Vorzugsweise liegt die durchschnittliche Partikelgröße bei 100 µm unter darunter, besonders bevorzugt zwischen 15 - 75 µm.

Nichteinschränkende Beispiele geeigneter mineralischer Additive sind Calciumcarbonat, Dolomit, Bariumsulfat, Calciumsulfat, Kaolin, Glimmer, Talk, Wollastonit, Feldspat, Nephelin-Syenit, Silica (insbesondere Quarzmehl), Magnesiumcarbonat, Magnesiumhydroxid oder Aluminiumtrihydrat. Von diesen mineralischen Additiven sind Talk und Dolomit besonders bevorzugt.

Der Gehalt an mineralischem Additiv unterliegt keiner besonderen Beschränkung. Die Grundierungszusammensetzung kann das mineralische Additiv demnach in einer Menge von 5 bis 55 Gew.-%, besonders bevorzugt 10 bis 50 Gew.-%, insbesondere 15 bis 45 Gew.-%, speziell 20 bis 50 Gew.-%, ganz speziell 25 bis 45 Gew.-%, jeweils bezogen auf die Zusammensetzung, enthalten.

Als weiteren Bestandteil kann die Grundierungszusammensetzung mindestens eine Wachsemulsion umfassen. Die verwendete Wachsemulsion kann beispielsweise eine Wachsemulsion auf Basis von Paraffin, oxidiertem Paraffin, Polyethylen (PE), Polypropylen (PP), Stearate, Amidwachse wie zum Beispiel Ethylen-bis-stearylamid, Stearylamid oder Mischungen daraus sein. Bevorzugt sind PTFE (Polytetrafluorethylen; Teflon), PP, PE oder PP Wachse.

Die Konzentration der verwendeten Wachsemulsion kann variieren und Konzentrationen der entsprechenden Verbindung(en) in der Emulsion von ungefähr 50 Gew.-% haben sich als geeignet herausgestellt.

Auch der Gehalt an Wachsemulsion in der Grundierungszusammensetzung unterliegt ebenfalls keiner besonderen Beschränkung. Die Grundierungszusammensetzung kann die Wachsemulsion demnach in einer Menge von 0,1 bis 12,00 Gew.-%, besonders bevorzugt 0,20 bis 10,00 Gew.-%, insbesondere 0,30 bis 8,00 Gew.-%, speziell 0,40 bis 6,50 Gew.-%, ganz speziell 0,50 bis 5,00 Gew.-%, jeweils bezogen auf die Zusammensetzung, enthalten.

Als weiteren Bestandteil kann die Grundierungszusammensetzung Bentonit(e), Kaolin(e) und/oder Hectorit(e) umfasst, wobei diese Bestandteile vorzugsweise in Form mindestens einer Lösung in der Grundierungszusammensetzung enthalten ist.

Weitere Bestandteile, welche in der Zusammensetzung enthalten sein können, können ausgewählt werden aus der Gruppe, bestehend aus:
(1) mindestens ein Weichmacher, wie zum Beispiel Phthalat, Adipin oder Zitronensäure, in einer Menge von 0,25 bis 5,00 Gew.-%, besonders bevorzugt 0,50 bis 4,00 Gew.-%, insbesondere 0,75 bis 3,00 Gew.-%, speziell 1,00 bis 2,00 Gew.-%, jeweils bezogen auf die (vorzugsweise wässrige) Grundierungszusammensetzung. Insbesondere das Phthalat kann auch als Hilfsmittel für die Filmbildung dienen;
(2) Filmbildehilfsmittel zur Steuerung der Verfilmung, wie z.B. Dimethoxymethylethoxypropanol in einer Menge von 0,25 bis 5,00 Gew.-%, besonders bevorzugt 0,50 bis 4,00 Gew.-%, insbesondere 0,75 bis 3,00 Gew.-%, speziell 1,00 bis 2,00 Gew.-%, jeweils bezogen auf die (vorzugsweise wässrige) Grundierungszusammensetzung;
(3) mindestens ein Entschäumer zur Verbesserung der entschäumenden Eigenschaften, wie z.B. ein Polysiloxan oder ein Polyetherpolysiloxan, in einer Menge von 0,05 bis 3,00 Gew.-%, besonders bevorzugt 0,075 bis 2,50 Gew.-%, insbesondere 0,1 bis 2,00 Gew.-%, speziell 0,15 bis 1,50 Gew.-%, jeweils bezogen auf die (vorzugsweise) wässrige Grundierungszusammensetzung;
(4) mindestens Netz- bzw. Dispergiermittel, wie z.B. ein Polycarboxylat, in einer Menge von 0,05 bis 3,00 Gew.-%, besonders bevorzugt 0,075 bis 2,50 Gew.-%, insbesondere 0,1 bis 2,00 Gew.-%, speziell 0,15 bis 1,50 Gew.-%, jeweils bezogen auf die (vorzugsweise wässrige) Grundierungszusammensetzung.

Die Grundierungszusammensetzung enthält vorzugsweise Styrol-Acrylat - Copolymer Dispersion in 45 bis 60 Gew.-% Talk oder Dolomite in 25 bis 40 Gew.-% Diisobutylphthalat und Dimethoxymethylethoxypropanol in je 1 bis 2 Gew.-% spwoe 2-Dimethylaminoethanol, Polyetherpolysiloxan, Polycarboxylat, Polysiloxane in je 0,15 - 1,5 Gew.-%, 50 Gew.-%-igen Wachsemulsion in von 0,5 bis 5 Gew.%, sowie eine 4 Gew.-%-ige hectorite Bentone Lösung.

### Markierungszusammensetzung

Das erfindungsgemäße Markierungssystem umfasst ferner eine Markierungszusammensetzung. Diese ist vorzugsweise "Kaltplastik". Unter dem Begriff "kaltplastisch" wird im Rahmen der vorliegenden Erfindung verstanden, dass die betreffende Zusammensetzung bei Umgebungstemperatur bei normaler Anwendung, insbesondere bei Temperaturen von +5 bis +35 °C plastisch ist. Die Zusammensetzung ist damit bei üblichen Umgebungstemperaturen auf entsprechende Untergründe applizierbar.

Die in dem erfindungsgemäßen Markierungssystem verwendete Markierungszusammensetzung enthält mindestens ein Polymethylmethacrylatharz und ist durch mindestens eine der folgenden Eigenschaften gekennzeichnet:
(a) Reißfestigkeit zwischen 1 und 3 N/mm², besonders bevorzugt 1,25 und 2,75 N/mm², insbesondere 1,50 und 2,50 N/mm², speziell 1,75 und 2,25 N/mm²;
(b) Reißdehnung zwischen 80 und 99 %, besonders bevorzugt 85 und 98 %, insbesondere 90 und 97 %, speziell 92 und 96 %; und
(c) Shore-A-Härte zwischen 60 und 95, besonders bevorzugt 65 und 90, insbesondere 70 und 85, speziell 75 und 80.

Diese Eigenschaften werden jeweils mit Verfahren nach der DIN EN ISO 527-1 und -2 sowie der DIN 53505 bestimmt.

Besonders bevorzugt erfüllt die erfindungsgemäße Markierungszusammensetzung zwei oder alle der zuvor beschriebenen Eigenschaften.

Insbesondere erfüllt die erfindungsgemäße Markierungszusammensetzung alle drei der zuvor beschriebenen Eigenschaften.

Die zuvor definierten Eigenschaften der erfindungsgemäßen Markierungszusammensetzung werden durch die Auswahl geeigneter Bestandteile und geeigneter Mengenverhältnisse der Bestandteile der erfindungsgemäßen Markierungszusammensetzung erreicht. Dabei hat es sich herausgestellt, dass die erfindungsgemäße Markierungszusammensetzung mindestens ein Polymethylmethacrylatharz (PMMA-Harz) umfasst. Dabei handelt es sich vorteilhafterweise um ein vorbeschleunigtes und/oder intern flexibilisiertes Polymethylmethacrylatharz. "Vorbeschleunigt" bedeutet in diesem Zusammenhang, dass dem Harz bereits ein Beschleuniger für die Härtung beigefügt ist und daher nicht mehr separat hinzugefügt werden muß. Beispiele für Beschleuniger sind dem Fachmann bekannt, so z.B. Aminbeschleuniger, wie Diethylanilin (DEA), Dimethylanilin (DMA) oder Dimethylparatoluidin (DMP, DMPT). Die Verwendung von reaktiven Rohstoffen zur Flexibilisierung des Harzes ist dem Fachmann ebenso geläufig.

Die Menge an Polymethylmethacrylatharz in der erfindungsgemäßen Markierungszusammensetzung unterliegt grundsätzlich keiner Beschränkung. Es hat sich allerdings als geeignet herausgestellt, wenn die Menge an Polymethylmethacrylatharz in der erfindungsgemäßen Markierungszusammensetzung 15,00 bis 80,00 Gew.-%, besonders bevorzugt 20,00 bis 75,00 Gew.-%, insbesondere 25,00 bis 70,00 Gew.-%, speziell 30,00 bis 65,00 Gew.-%, ganz speziell 35,00 bis 60,00 Gew.-%, jeweils bezogen auf die erfindungsgemäße Markierungszusammensetzung beträgt.

Neben dem Polymethylmethacrylatharz kann die erfindungsgemäße Markierungszusammensetzung noch weitere Bestandteile umfassen.

In einer ersten Ausführungsform kann die erfindungsgemäße Markierungszusammensetzung Füllstoffe wie Carbonate, wie z.B. Calciumcarbonat, Quarzsmehle, Quarzsande, Bariumsulfat, Aluminiumhydroxid, Kreide, Talkum oder Calciumsulfat als Füllstoff enthalten. Die Menge des Füllstoffs liegt bevorzugt bei 15,00 bis 70,00 Gew.-%, besonders bevorzugt 20,00 bis 65,00 Gew.-%, insbesondere 25,00 bis 60,00 Gew.-%, speziell 30,00 bis 55,00 Gew.-%, ganz speziell 35,00 bis 50,00 Gew.-%, jeweils bezogen auf die erfindungsgemäße Markierungszusammensetzung.

Des weiteren kann die erfindungsgemäße Markierungszusammensetzung als zusätzlichen Bestandteil mindestens ein Pigment enthalten. Das Pigment ist dabei bevorzugt ausgewählt aus der Gruppe bestehend aus organischen Buntpigmenten und anorganischen Buntpigmenten.

Falls in der erfindungsgemäßen Markierungszusammensetzung ein anorganisches Buntpigment verwendet wird, so kann dieses anorganische Buntpigment ausgewählt sein aus der Gruppe bestehend aus einem Titanoxidpigment, einem Eisenoxidrotpigment, einem Eisenoxidschwarzpigment, einem Bismutvanadatpigment, einem Bleichromatpigment, einem Molybdatrotpigment, einem Molybdatorangepigment, einem Cersulfidpigment, einem Silikatpigment, Chromtitangelb, Chromniobtitanat, Chromwolframtitangelb, Nickeltitangelb, Bismutvanadatmolybdat, einem komplexen anorganischen Buntpigment oder einer Kombination davon. Insbesondere bevorzugt sind Eisenoxide und Chromoxide.

Falls in der erfindungsgemäßen Markierungszusammensetzung ein organisches Buntpigment verwendet wird, so handelt es sich dabei vorzugsweise um Azo- oder Disazopigmente oder Phtalocyaninpigmente.

Die Menge an verwendetem Pigment in der erfindungsgemäßen Markierungszusammensetzung unterliegt dabei keiner besonderen Beschränkung und eine Menge von 2,00 bis 10,00 Gew.-%, besonders bevorzugt 2,50 bis 9,50 Gew.-%, insbesondere 3,00 bis 9,00 Gew.-%, speziell 3,50 bis 8,50 Gew.-%, ganz speziell 4,00 bis 8,00 Gew.-%, jeweils bezogen auf die erfindungsgemäße Markierungszusammensetzung, kann verwendet werden.

Die erfindungsgemäße Markierungszusammensetzung kann des weiteren Siliciumdioxid und/oder Bentonit enthalten. Hinsichtlich der Verwendung von Siliciumdioxid in der erfindungsgemäßen Markierungszusammensetzung hat sich amorphes Siliciumdioxid als bevorzugt herausgestellt, da die rheologischen Materialeigenschaften positiv beeinflusst und eine gute Verträglichkeit hinsichtlich der Stabilität aufweist.

Falls in der erfindungsgemäßen Markierungszusammensetzung Siliciumdioxid und/oder Bentonit verwendet wird, so liegt dessen Gehalt in der erfindungsgemäßen Markierungszusammensetzung vorzugsweise in einem Bereich von 2,00 bis 10,00 Gew.-%, besonders bevorzugt 2,50 bis 9,50 Gew.-%, insbesondere 3,00 bis 9,00 Gew.-%, speziell 3,50 bis 8,50 Gew.-%, ganz speziell 4,00 bis 8,00 Gew.-%, jeweils bezogen auf die Zusammensetzung, in der Zusammensetzung enthalten ist.

Vorzugsweise enthält die erfindungsgemäße Markierungszusammensetzung als weiteren Bestandteil Fasern, vorzugsweise Fibridfasern. Dabei ist es bevorzugt, daß die Fibridfasern aus Polyethylen, Polyester, Glas-, und Polypropylenfasern aufgebaut sind.

Hinsichtlich der Größe der zu verwendenden Fasern hat es sich als bevorzugt herausgestellt, wenn die Fasern eine Länge von 0,10 bis 5,00 mm, besonders bevorzugt 0,20 bis 4,00 mm, insbesondere 0,30 bis 3,00 mm, speziell 0,40 bis 2,50 mm, ganz speziell 0,50 bis 2,00 mm, aufweisen. Weiter bevorzugt ist, wenn die zu verwendenden Fasern eine Faserstärke von 10,00 bis 75,00 µm, besonders bevorzugt 15,00 bis 70,00 µm, insbesondere 20,00 bis 65,00 µm, speziell 25,00 bis 60,00 µm, ganz speziell 35,00 bis 55,00 µm, aufweisen.

Die Fasern sind in der erfindungsgemäßen Markierungszusammensetzung in einer Menge von 0,10 bis 6,00 Gew.-%, besonders bevorzugt 0,20 bis 5,00 Gew.-%, insbesondere 0,30 bis 4,50 Gew.-%, speziell 0,40 bis 4,00 Gew.-%, ganz speziell 0,50 bis 3,50 Gew.-%, jeweils bezogen auf die erfindungsgemäße Markierungszusammensetzung, enthalten.

Es kann auch von Vorteil sein, der erfindungsgemäßen Markierungszusammensetzung als weiteren Bestandteil mindestens einen Inhibitor zur Reaktionsverzögerung beizufügen, um zu vermeiden, dass die Markierung zu schnell trocknet. Damit wird die "Topfzeit" (Verarbeitungszeit) und Aushärtungszeit gesteuert. Bei dem Inhibitor kann es sich beispielsweise um eine 8- 12 Gew-%ige, vorzugsweise eine 10 % Gew-%-ige Lösung eines 2-6-di-tert-butyl-p-cresol handeln. Diese Inhibitorlösung kann in Mengenanteilen von 0 - 1 Gew.% der Formulierung zugesetzt werden. Vorzugsweise zwischen 0,05 und 0,4 Gew.%. Aus Gründen der Dosiergenauigkeit vom Inhibitor (z.B. 2-6-di-tert-butyl-p-cresol) ist es vorteilhaft, eine Lösung zu verwenden. Eine direkte Zugabe des Inhibitors ist aber auch möglich.

Des weiteren kann die erfindungsgemäße Markierungszusammensetzung eine Polyvinylderivatlösung enthalten. Die Polyvinylderivatlösung kann in einer Konzentration von 50,00 bis 95,00 Gew.-%, besonders bevorzugt 55,00 bis 90,00 Gew.-%, insbesondere 60,00 bis 85,00 Gew.-%, speziell 60,00 bis 80,00 Gew.-%, ganz speziell 65,00 bis 75,0 Gew.-% vorliegen. Die Zugabemenge für die Markierungszusammensetzung beträgt vorzugsweise 0,05 - 1 Gew.-%.

Die Markierungszusammenstzung kann zusätzlich noch eine siliconmodifizierte Alkylammoniumsalz-Lösung enthalten. Diese wird vorzugweise als 70 %ige Lösung eingesetzt. Der Mengenanteil in der Markierungszusammensetzung kann bei 0,05 - 1,0 Gew.-% liegen.

Eine vorteilhafte Markierungszusammensetzung umfaßt demnach: Polymethylmethacrylat-Harz in Mengenanteilen von 35 - 60 Gew.-% und Calciumcarbonat in Mengenanteilen von 35 - 50 Gew.-% sowie Pigmenten aus Titandioxid und/oder organischen und/oder anorganischen Buntpigmenten 4 bis 8 Gew.-% amorphes Siliciumdioxid und/oder Bentonite in Mengenanteilen von 0,3 - 2 Gew.-% und Polyethylen-Fibridfasem in Mengenanteilen von 0,5 - 3,5 Gew.-%, vorteilhaft kann die Faserlänge zwischen 0,5 bis 2 mm sowie die Faserstärke zwischen 35 bis 55 µm variieren, sowie eine 10 Gew.-%-ige Inhibitorlösung zur Reaktionsverzögerung, eine 75 Gew.-%-ige Polyvinylderivat-Lösung und eine ca. 70 Gew.-% ige silconmodifizierte Alkylammoniumsalz-Lösung in Mengenanteilen von je 0,05 bis 1 Gew.-%, vorteilhaft kann die Konzentration der Inhibitorlösung von 8 bis 12 Gew.-%. Die der Polyvinylderivat-Lösung von 65 - 85 Gew.-% und die der Polycarbonsäuresalzlösung von 45 bis 60 Gew.-% variieren.

Zur Härtung dieses Harzes kann zweckmäßig ein Katalysator, vorzugsweise Dibenzylperoxid, vorteilhaft zusammen mit einem Weichmacher, bei einem bevorzugten Mengenanteilverhältnis von Dibenzylperoxid zu Weichmacher von 40 zu 60 bis 60 zu 40, insbesondere 50 zu 50 als Gewicht ausgedrückt, verwendet werden.

Diese Zusammensetzung ist durch folgende Eigenschaften demonstriert:

### Mechanisches Eigenschaftsprofil

| | |
|---|---|
| Reißfestigkeit: | ca. 2 N/mm² |
| Reißdehnung: | ca. 94% |
| Shore-A-Härte: | ca. 78 |

Die erfindungsgemäße Markierungszusammensetzung wird im Allgemeinen unter Verwendung eines Katalysators gehärtet. Als bevorzugter Katalysator zur Härtung des Polymethylmethacrylatharzes hat sich ein Katalysator herausgestellt, welcher ausgewählt ist aus der Gruppe, bestehend aus Katalysatoren auf Peroxidbasis, vorzugsweise ein organisches Peroxid, insbesondere bevorzugt Benzylperoxid. Insbesondere kommt Dibenzoylperoxid als Katalysator in Frage. Die Markierungszusammensetzung weist vorteilhafterweise 98 Gew. Teile der Markierungszusammensetzung und 2 Gew. Teile an Katalysator auf.

Ferner kann zusätzlich zu dem Katalysator bei der Härtung der erfindungsgemäßen Markierungszusammensetzung ein Weichmacher verwendet werden. Dabei werden Katalysator und Weichmacher vorzugsweise in einem Verhältnis zwischen Katalysator und Weichmacher von 60 : 40 bis 40 : 60, besonders bevorzugt 55: 45 bis 45 : 55, und insbesondere 50 : 50 verwendet.

Darüber hinaus kann die erfindungsgemäße Markierungszusammensetzung weitere üblicherweise in Markierungszusammensetzungen verwendete Additive enthalten, wie beispielsweise Farbmittel zum Nuancieren sowie Hilfsmittel aus der Gruppe der Tenside, nichtpigmentäre und pigmentäre Dispergiermittel, Füllstoffe, Stellmittel, weitere Harze, Wachse, Entschäumer, Antistaubmittel, Extender, Konservierungsmittel, Additive zur Steuerung der Rheologie, Netzmittel, Antioxidantien, UV-Absorber, Lichtstabilisatoren, Reflexionsförderer oder eine Kombination davon.

Hinsichtlich des Reflexionsförderers können beispielsweise Glasteilchen wie Glasperlen und/oder Kunststoffteilchen wie Kunststoffperlen verwendet werden. Entsprechende Reflexionsförderer sind unter anderem in DE 35 24 661 A1 beschrieben, dessen diesbezügliche Offenbarung durch Bezugnahme in die vorliegende Anmeldung eingeschlossen wird.

Weiterer Gegenstand der vorliegenden Erfindung ist darüber hinaus auch die zuvor beschriebene erfindungsgemäße Markierungszusammensetzung, an sich.

Die vorliegende Erfindung betrifft darüber hinaus die Verwendung des erfindungsgemäßen Markierungssystems zur Herstellung von Markierungen auf Untergrundflächen sowie ein entsprechendes Verfahren unter Verwendung der (vorzugsweise wässrigen) Grundierungszusammensetzung und der erfindungsgemäßen Markierungszusammensetzung. Dabei wird die Grundierungszusammensetzung zunächst auf einem entsprechenden Untergrund aufgetragen. Im Anschluss daran wird die erfindungsgemäße Markierungszusammensetzung auf die zuvor grundierte Oberfläche aufgetragen.

Bei einer entsprechenden zu grundierenden Untergrundfläche kann es sich im Rahmen der vorliegenden Erfindung beispielsweise um Asphaltflächen oder Betonflächen handeln.

Für die Grundierung der Untergrundfläche ist es bevorzugt, wenn der verwendete Untergrund vorzugsweise sauber, trocken und frei von Staub, Öl sowie Fett und anderen Verunreinigungen ist. Insbesondere bei neuen Untergrundflächen, beispielsweise bei neuen Asphaltflächen, sollten gegebenenfalls vorhandene Fluxöle vorzugsweise abgefahren oder abgewittert sein.

Zur Grundierung von entsprechenden Untergrundflächen wird die Grundierungszusammensetzung vorzugsweise in Schichtdicken von 100 bis 700 µm, besonders bevorzugt 150 bis 650 µm, insbesondere 200 bis 600 µm, speziell 250 bis 550 µm, ganz speziell 300 bis 500 µm, in Abhängigkeit von der Rauhigkeit der Untergrundfläche aufgetragen. Die Applikation der Grundierungszusammensetzung kann dabei mit in der Markierungsbranche üblicherweise verwendeten Vorrichtungen erfolgen. So kann die Grundierungszusammensetzung beispielsweise mittels Luft- oder Airless-Spritzverfahren aufgetragen werden. Eine Applikation der Grundierungszusammensetzung kann auch mittels einer Fellrolle, insbesondere bei der Handverarbeitung und/oder kleineren Markierungsausführungen, erfolgen.

Im Allgemeinen wird die Grundierungszusammensetzung immer breiter als die nachfolgende Strichmarkierung mittig auf die zuvor grundierte Fläche aufgezogen. Die Wartezeit zwischen dem Grundierungsauftrag und der Folgemarkierung kann etwa 0,5 und 2 Stunden betragen.

Im Anschluss erfolgt die Markierung der Untergrundfläche unter Verwendung der erfindungsgemäßen Markierungszusammensetzung, wobei die Applikation vorzugsweise, nicht jedoch zwingend, auf die Grundierung erfolgt. Ferner kann die erfindungsgemäße Markierungszusammensetzung auch mittels eines Ziehschuhverfahrens erfolgen, wobei die Auftragsdicke über den einstellbaren Spalt des Ziehschuhs vorgegeben werden kann. Bei diesen Ziehschuhverfahren können sowohl handgeführte als auch selbstfahrende Markiermaschinen verwendet werden.

Dabei kann die erfindungsgemäße Markierungszusammensetzung mit variierenden Nassfilmdicken aufgetragen werden. Entsprechende Nassfilmdicken können beispielsweise zwischen 1000 und 5000 µm, vorzugsweise 1500 bis 4500 µm, besonders bevorzugt 2000 bis 4000 µm, insbesondere 2500 bis 3500 µm, betragen.

Der Auftrag der erfindungsgemäßen Markierungszusammensetzungen kann über folgende Schritte erfolgen:
- Auswahl des Ziehschuhs hinsichtlich der Strichbreite
- Einstellen der Schichtdicke durch Einstellung der Spaltöffnung am Ziehschuh
- Einhängen des Ziehschuhs in das Markierungsgerät
- Schließen der Spaltöffnung am Ziehschuh
- Befüllen des Ziehschuhs mit der Markierungszusammensetzung
- Aufsetzen des Ziehschuhs auf den Untergrund aufsetzen
- Öffnen des Verschlussmechanismusses am Ziehschuh
- Führen des Ziehschuhs mit gleichmäßiger Geschwindigkeit über den Untergrund.

In die so auf dem Untergrund erhaltene Markierungszusammensetzung kann in deren Oberfläche gegebenenfalls noch ein Nachstreugemisch eingestreut werden. Bei diesem Nachstreugemisch kann es sich beispielsweise um Reflexionskörper und/oder Griffigkeitsmitteln in Korngrößen von vorzugsweise 0,10 bis 5,00 mm, besonders bevorzugt 0,20 bis 4,50 mm, insbesondere 0,30 bis 4,00 mm, speziell 0,40 mm bis 3,50 mm, ganz speziell 0,50 bis 3,00 mm, handeln. Falls die zuvor genannten Bestandteile verwendet werden, so kann ihr Verhältnis untereinander weitgehend variieren und beispielsweise in Bereichen von Reflexionskörper zu Griffigkeitsmitteln von 60 : 40 bis 80 : 20 vorliegen. Bei den Reflexionskörpern kann es sich um Glaskugeln handeln. Das Griffigkeitsmittel besteht vorzugsweise aus Korund.

Das Nachstreugemisch wird in einer Menge von vorzugsweise 100 bis 1000 g/m²,besonders bevorzugt 200 bis 900 g/m², insbesondere 300 bis 800 g/m²*_{.}* speziell 400 bis 700 g/m², ganz speziell 500 bis 600 g/m², angewendet.

Das gegebenenfalls zu verwendende Nachstreugemisch kann mittels einer Perlschleuder oder mittels einer Perlpistole in die Oberfläche der Markierung aufgetragen werden.

Nach der vorgesehenen Liegedauer bzw. Einsatzdauer kann die resultierende Markierung rückstandslos rein mechanisch von Hand durch Abziehen vom Untergrund entfernt werden. Umfangreiche Vorrichtungen zum Entfernen der Markierung sind nicht erforderlich.

Die vorliegende Erfindung betrifft darüber hinaus auch die einzelne Verwendung der der Markierungszusammensetzung zur Herstellung von Markierungen auf Untergrundflächen. Unter einzelner Verwendung wird im Rahmen der vorliegenden Erfindung verstanden, dass die erfindungsgemäße Markierungszusammensetzung alleine, d.h. nicht in Kombination mit der Grundierungszusammensetzung, verwendet wird. Für weitere Ausführungen wird auf das obige Verfahren zur Markierung von Untergrundflächen verwiesen.

Weiterer Gegenstand der vorliegenden Erfindung sind Verfahren zur Herstellung der zuvor beschriebenen Zusammensetzungen durch Mischen der jeweiligen Zusammensetzungsbestandteile.

Die Zusammensetzungen können wie folgt hergestellt werden:

### Grundierungszusammensetzung:

Das Styrol-Acrylat Copolymer wird als Dispersion in einen Ansatzbehälter eingewogen und die weiteren abgewogenen Inhaltsstoffe werden unter ständigem Rühren nacheinander zugegeben. Die Mischung ist solange zu rühren bis die einzelnen Inhaltsstoffe homogen verteilt sind.

Markierungszusammensetzung: Das Bindemittel (PMMA - Harz) wird in einen Ansatzbehälter eingewogen. Danach werden die abgewogenen weiteren Inhaltsstoffe nacheinander unter Rühren zugegeben; mit Ausnahme der faserartigen Inhaltsstoffe. Diese Mischung wird solange dispergiert, bis eine homogene Mischung vorliegt. Danach werden die abgewogenen faserartigen Inhaltstoffe unter Rühren zugegeben und solange gerührt, bis eine homogene Verteilung der Fasern vorliegt. Beim gesamten Produktionsverlauf darf die Materialtemperatur von 35 °C nicht überschritten werden.

Das erfindungsgemäße Markierungssystem sowie die darin umfassten Zusammensetzungen eignen sich insbesondere zur Herstellung von temporären Markierungen, insbesondere Fahrbahnmarkierungen, da das gesamte Markiersystem nach deren Liegedauer bzw. Einsatzdauer rückstandslos und zerstörungsfrei vom Untergrund leicht entfernt werden kann. Dieses ist unter anderem auch auf die Materialeigenschaften der zwei verwendeten Zusammensetzungen und deren spezifische Kombination zurückzuführen. Die vorgeschlagene Grundierungszusammensetzung besitzt nämlich Hafteigenschaften, die von einer überwiegenden Adhäsionshaftung zum Untergrund sowie eine überwiegende Kohäsionshaftung zur nachfolgenden Markierungszusammensetzung bestimmt sind. Das mechanische Eigenschaftsprofil der Markierung ist ferner so formuliert, dass die bei der Entfernung der temporären Markierungssystems auftretenden Schäl- und Scherkräfte aufgenommen werden.

Allerdings weist die einzeln beanspruchte Markierungszusammensetzung auch alleine, d.h. ohne Kombination mit der Grundierungszusammensetzung die zuvor beschriebenen Vorteile auf.

## Patentansprüche

1. Markierungszusammensetzung, welche mindestens ein Polymethylmethacrylatharz enthält und mindestens eine der folgenden Eigenschaften aufweist:
(a) Reißfestigkeit zwischen 1 und 3 N/mm².
(b) Reißdehnung zwischen 80 und 99 %; und
(c) Shore-A-Härte zwischen 60 und 95.

2. Markierungszusammensetzung nach Anspruch 1, enthaltend 15 bis 80 Gew.-% Polymethylmethacrylatharz.

3. Markierungszusammensetzung nach Anspruch 1 oder 2, **dadurch gekennzeichnet, dass** die Markierungszusammensetzung ein Carbonat enthält.

4. Markierungszusammensetzung nach einem der Ansprüche 1 bis 3, **dadurch gekennzeichnet, dass** die Markierungszusammensetzung als weiteren Bestandteil mindestens ein Pigment umfasst.

5. Markierungszusammensetzung nach einem der Ansprüche 1 bis 4, **dadurch gekennzeichnet, dass** die Markierungszusammensetzung als weiteren Bestandteil Siliciumdioxid und/oder Bentonit enthält.

6. Markierungszusammensetzung nach einem der Ansprüche 2 bis 5, **dadurch gekennzeichnet, dass** die Markierungszusammensetzung Faser enthält.

7. Markierungszusammensetzung nach einem der Ansprüche 1 bis 6, **dadurch gekennzeichnet, dass** die Markierungszusammensetzung mindestens einen Inhibitor zur Reaktionsverzögerung umfasst.

8. Markierungszusammensetzung nach einem der Ansprüche 1 bis 7, **dadurch gekennzeichnet, dass** die Markierungszusammensetzung eine Polyvinylderivatlösung umfasst.

9. Markierungszusammensetzung nach Anspruch 1 bis 8, **dadurch gekennzeichnet, dass** sie einen Katalysator zur Härtung des Polymethylmethacrylatharzes sowie einen zusätzlich Weichmacher enthält.

10. Markierungszusammensetzung nach einem der Ansprüche 1 bis 9, **dadurch gekennzeichnet, dass** die Markierungszusammensetzung zusätzlich mindestens ein Farbmittel zum Nuancieren oder ein Hilfsmittel aus der Gruppe der Tenside, nichtpigmentären und pigmentären Dispergiermittel, Füllstoffe, Stellmittel, Harze, Wachse, Entschäumer, Antistaubmittel, Extender, Konservierungsmittel, Trocknungsverzögerungsmittel, Additive zur Steuerung der Rheologie, Netzmittel, Antioxidantien, UV-Absorber, Lichtstabilisatoren, oder eine Kombination davon enthält.

11. Markierungszusammensetzung nach einem der Ansprüche 1 bis 10, umfassend folgende Komponenten:
Polymethylmethacrylat-Harz in Mengenanteilen von 35 - 60 Gew.-%,
Calciumcarbonat in Mengenanteilen von 35 - 50 Gew.-%,
Pigmenten aus Titandioxid und/oder organischen und/oder anorganischen Buntpigmenten 4 bis 8 Gew.-% amorphes Siliciumdioxid und/oder Bentonite in Mengenanteilen von 0,3 - 2 Gew.-%,
Polyethylen-Fibridfasern in Mengenanteilen von 0,5 - 3,5 Gew.-%, vorteilhaft kann die Faserlänge zwischen 0,5 bis 2 mm sowie die Faserstärke zwischen 35 bis 55 µm variieren,
eine 10 Gew.-%-ige Inhibitorlösung zur Reaktionsverzögerung,
eine 75 Gew.-%-ige Polyvinylderivat-Lösung und
eine 70 % Gew.%-ige siliconmodifizierte Alkylammoniumsatz-Lösung in Mengenanteilen von je 0.05 bis 1 Gew.-%

12. Markierungssystem, umfassend eine Grundierungszusammensetzung und die Markierungszusammensetzung nach einem der Ansprüche 1 bis 11.

13. Markierungssystem, nach Anspruch 12, worin die Grundierungszusammensetzung ein Styrol-Acrylat-Copolymer enthält.

14. Markierungssystem nach Anspruch 13, worin das Styrol-Acrylat-Copolymer in Form einer wässrigen Dispersion in der Grundierungszusammensetzung enthalten ist.

15. Markierungssystem nach einem der Ansprüche 12 bis 14, worin der Gehalt der Dispersion in der Grundierungszusammensetzung 25 bis 85 Gew.-%, bezogen auf die Grundierungszusammensetzungist.

16. Markierungssystem nach einem der Ansprüche 12 bis 15, worin die GrundierungsZusammensetzung zusätzlich mindestens ein mineralisches Additiv umfasst.

17. Markierungssystem nach einem der Ansprüche 12 bis 16, worin die Grundierungszusammensetzung mindestens eine Wachsemulsion umfasst.

18. Markierungssystem nach einem der Ansprüche 12 bis 17, worin die Grundierungszusammensetzung mindestens einen weiteren Bestandteil umfasst, ausgewählt aus der Gruppe, bestehend aus:
(1) einem Weichmacher, vorzugsweise in einer Menge von 0,25 bis 5,00 Gew.%, bezogen auf die Zusammensetzung;
(2) einem Filmbindehilfsmittel, vorzugsweise in einer Menge von 0,25 bis 5,00 Ges.-%, bezogen auf die Zusammensetzung;
(3) einem Entschäumer, vorzugsweise in einer Menge von 0,05 bis 3,00 Gew.-%, bezogen auf die Zusammensetzung; oder
(4) einem Netz- bzw. Dispergiermittel, vorzugsweise in einer Menge von 0,05 bis 3,00 Gew.%, jeweils bezogen auf die Zusammensetzung.

## Claims

1. Marking composition containing at least one polymethyl methacrylate resin and having at least one of the following properties:
(a) breaking strength between 1 and 3 N/mm²;
(b) breaking extension between 80 and 99%; and
(c) Shore A hardness between 60 and 95.

2. Marking composition according to Claim 1, containing 15 to 80 wt% of polymethyl methacrylate resin.

3. Marking composition according to Claim 1 or 2, **characterized in that** the marking composition contains a carbonate.

4. Marking composition according to any one of Claims 1 to 3, **characterized in that** the marking composition comprises at least one pigment as a further constituent.

5. Marking composition according to any one of Claims 1 to 4, **characterized in that** the marking composition contains silicon dioxide and/or bentonite as a further constituent.

6. Marking composition according to any one of Claims 2 to 5, **characterized in that** the marking composition contains fibre.

7. Marking composition according to any one of Claims 1 to 6, **characterized in that** the marking composition comprises at least one inhibitor to retard reaction.

8. Marking composition according to any one of Claims 1 to 7, **characterized in that** the marking composition comprises a polyvinyl derivative solution.

9. Marking composition according to Claim 1 to 8, **characterized in that** it contains a catalyst to cure the polymethyl methacrylate resin and also an additionally plasticizer.

10. Marking composition according to any one of Claims 1 to 9, **characterized in that** the marking composition additionally contains at least one colorant for shading or an auxiliary agent from the group of surfactants, pigmentary and non-pigmentary dispersants, fillers, standardizers, resins, waxes, defoamers, anti-dusting agents, extenders, preservatives, dryness-retarding agents, additives to control the rheology, wetting agents, antioxidants, UV absorbers, light stabilizers or a combination thereof.

11. Marking composition according to any one of Claims 1 to 10, comprising the following components:
polymethyl methacrylate resin in fractions of 35 - 60 wt%,
calcium carbonate in fractions of 35 - 50 wt%,
pigments from titanium dioxide and/or organic and/or inorganic colour pigments 4 to 8 wt% amorphous silica and/or bentonites in fractions of 0.3 - 2 wt%,
polyethylene fibrid fibres in fractions of 0.5 - 3.5 wt%, advantageously the fibre length can vary between 0.5 to 2 mm and also the fibre thickness between 35 to 55 µm,
a 10 wt% inhibitor solution to retard reaction,
a 75 wt% polyvinyl derivative solution, and
a 70 wt% silicone-modified alkylammonium salt solution in fractions of 0.05 to 1 wt% each.

12. Marking system comprising a priming composition and the marking composition according to any one of Claims 1 to 11.

13. Marking system according to Claim 12, wherein the priming composition contains a styrene-acrylate copolymer.

14. Marking system according to Claim 13, wherein the styrene-acrylate copolymer is present in the priming composition in the form of an aqueous dispersion.

15. Marking system according to any one of Claims 12 to 14, wherein the dispersion content of the priming composition is 25 to 85 wt%, based on the priming composition.

16. Marking system according to any one of Claims 12 to 15, wherein the priming composition additionally comprises at least one mineral additive.

17. Marking system according to any one of Claims 12 to 16, wherein the priming composition comprises at least one wax emulsion.

18. Marking system according to any one of Claims 12 to 17, wherein the priming composition comprises at least one further constituent selected from the group consisting of:
(1) a plasticizer, preferably in an amount of 0.25 to 5.00 wt%, based on the composition;
(2) a film-binding auxiliary agent, preferably in an amount of 0.25 to 5.00 wt%, based on the composition;
(3) a defoamer, preferably in an amount of 0.05 to 3.00 wt%, based on the composition; or
(4) a wetting or dispersing agent, preferably in an amount of 0.05 to 3.00 wt%, both based on the composition.

## Revendications

1. Composition de marquage qui contient au moins une résine de poly(méthacrylate de méthyle) et qui présente au moins une des propriétés suivantes :
(a) résistance à la déchirure entre 1 et 3 N/mm² ;
(b) allongement à la déchirure entre 80 et 99% ; et
(c) dureté Shore A entre 60 et 95.

2. Composition de marquage selon la revendication 1, contenant 15 à 80% en poids de résine de poly(méthacrylate de méthyle).

3. Composition de marquage selon la revendication 1 ou 2, **caractérisée en ce que** la composition de marquage contient un carbonate.

4. Composition de marquage selon l'une quelconque des revendications 1 à 3, **caractérisée en ce que** la composition de marquage contient, comme autre constituant, au moins un pigment.

5. Composition de marquage selon l'une quelconque des revendications 1 à 4, **caractérisée en ce que** la composition de marquage contient, comme autre constituant, du dioxyde de silicium et/ou de la bentonite.

6. Composition de marquage selon l'une quelconque des revendications 2 à 5, **caractérisée en ce que** la composition de marquage contient des fibres.

7. Composition de marquage selon l'une quelconque des revendications 1 à 6, **caractérisée en ce que** la composition de marquage comprend au moins un inhibiteur pour ralentir la réaction.

8. Composition de marquage selon l'une quelconque des revendications 1 à 7, **caractérisée en ce que** la composition de marquage comprend une solution d'un dérivé de polyvinyle.

9. Composition de marquage selon la revendication 1 à 8, **caractérisée en ce qu'**elle contient un catalyseur pour le durcissement de la résine de poly(méthacrylate de méthyle) ainsi qu'un plastifiant supplémentaire.

10. Composition de marquage selon l'une quelconque des revendications 1 à 9, **caractérisée en ce que** la composition contient en outre au moins un colorant pour le nuançage ou un adjuvant du groupe formé par les agents tensioactifs, les dispersants non pigmentaires et pigmentaires, les charges, les additifs, les résines, les cires, les antimousses, les agents antipoussière, les matières de charge, les conservateurs, les agents retardateurs du séchage, les additifs pour contrôler la rhéologie, les mouillants, les antioxydants, les absorbants des UV, les stabilisateurs de lumière ou une combinaison de ceux-ci.

11. Composition de marquage selon l'une quelconque des revendications 1 à 10, comprenant les composants suivantes :
une résine de poly(méthacrylate de méthyle) en des proportions de 35-60% en poids, du carbonate de calcium en des proportions de 35-50% en poids,
des pigments constitués de dioxyde de titane et/ou de pigments colorés organiques et/ou inorganiques, 4 à 8% en poids de dioxyde de silicium amorphe et/ou de la bentonite en des proportions de 0,3-2% en poids,
des fibres de fibrides de polyéthylène en des proportions de 0,5-3,5% en poids, avantageusement, la longueur des fibres peut varier entre 0,5 à 2 mm et l'épaisseur des fibres entre 35 à 55 µm,
une solution inhibitrice à 10% en poids pour retarder la réaction,
une solution à 75% en poids de dérivé de polyvinyle et
une solution à 70% en poids de sel d'alkylammonium modifié par silicone en des proportions de 0,05 à 1% en poids.

12. Système de marquage, comprenant une composition d'apprêt et la composition de marquage selon l'une quelconque des revendications 1 à 11.

13. Système de marquage selon la revendication 12, la composition d'apprêt contenant un copolymère de styrène-acrylate.

14. Système de marquage selon la revendication 13, le copolymère de styrène-acrylate étant contenu sous forme d'une dispersion aqueuse dans la composition d'apprêt.

15. Système de marquage selon l'une quelconque des revendications 12 à 14, la teneur en dispersion dans la composition d'apprêt étant de 25 à 85% en poids par rapport à la composition d'apprêt.

16. Système de marquage selon l'une quelconque des revendications 12 à 15, la composition d'apprêt comprenant en outre au moins un additif minéral.

17. Système de marquage selon l'une quelconque des revendications 12 à 16, la composition d'apprêt comprenant au moins une émulsion de cire.

18. Système de marquage selon l'une quelconque des revendications 12 à 17, la composition d'apprêt comprenant au moins un autre constituant, choisi dans le groupe formé par :
(1) un plastifiant, de préférence en une quantité de 0,25 à 5,00% en poids, par rapport à la composition ;
(2) un adjuvant de liaison de film, de préférence en une quantité de 0,25 à 5,00% en poids, par rapport à la composition ;
(3) un antimousse, de préférence en une quantité de 0,05 à 3,00% en poids, par rapport à la composition ; ou
(4) un mouillant ou, selon le cas, un dispersant, de préférence en une quantité de 0,05 à 3,00% en poids, à chaque fois par rapport à la composition.
